# EUROPEAN PATENT SPECIFICATION

(11) **EP 2 891 368 B1**
(45) Date of publication and mention of the grant of the patent: **15.09.2021**
(21) Application number: 13748449.9
(22) Date of filing: 06.08.2013
(51) Int. Cl.: H04W 48/08, H04W 48/16, H04W 48/18, H04W 36/00, H04W 36/14, H04W 36/22, H04W 88/06

(54) **INTERACTIONS BETWEEN RAN-BASED AND LEGACY WLAN MOBILITY**
INTERAKTIONEN ZWISCHEN EINER RAN-BASIERTEN UND EINER ALTGERÄT-WLAN-MOBILITÄT
INTERACTIONS ENTRE MOBILITÉ SUR LA BASE DU RÉSEAU RAN ET LE RÉSEAU WLAN EXISTANT

(30) Priority: 30.08.2012 US 201261695246 P; 12.03.2013 US 201313797765
(43) Date of publication of application: 08.07.2015
(73) Proprietor: Qualcomm Incorporated, San Diego, CA 92121-1714 (US)
(72) Inventor: HORN, Gavin, Bernard, San Diego, CA 92121-1714 (US); MEYLAN, Arnaud, San Diego, CA 92121-1714 (US); KAPOOR, Rohit, San Diego, CA 92121-1714 (US); GIARETTA, Gerardo, San Diego, CA 92121-1714 (US); MALLADI, Durga, Prasad, San Diego, CA 92121-1714 (US); CASACCIA, Lorenzo, San Diego, CA 92121-1714 (US)
(74) Representative: Bardehle Pagenberg Partnerschaft mbB Patentanwälte Rechtsanwälte
(86) International application number: PCT/US2013/053826
(87) International publication number: WO 2014/035619

(56) References cited:
- US-A1- 2004 205 158
- US-A1- 2005 153 692
- US-A1- 2011 085 498
- US-A1- 2011 188 376
- US-A1- 2011 222 523
- US-A1- 2012 178 448
- US-A1- 2012 196 644
- ALCATEL LUCENT: "Wi-Fi Roaming - Building on ANDSF and Hotspot2.0", INTERNET CITATION, 27 February 2012 (2012-02-27), pages 1-45, XP002677915, Retrieved from the Internet: URL:http://www.alcatel-lucent.com [retrieved on 2012-02-27]
- HUAWEI: "Discussion about ANDSF", 3GPP DRAFT; S2-083355, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Prague; 20080502, 2 May 2008 (2008-05-02), XP050265579, [retrieved on 2008-05-02]
- None

## Description

### CROSS-REFERENCE TO RELATED APPLICATIONS

This application claims the benefit of U.S. Provisional Patent Application No. 61/695,246, entitled, "INTERACTIONS BETWEEN RAN-BASED AND LEGACY WLAN MOBILITY", filed on August 30, 2012.

### BACKGROUND

### Field

Aspects of the present disclosure relate generally to wireless communication systems, and more particularly, to interactions between radio access network (RAN)-based and legacy wireless local access network (WLAN) mobility.

### Background

Wireless communication networks are widely deployed to provide various communication services such as voice, video, packet data, messaging, broadcast, and the like. These wireless networks may be multiple-access networks capable of supporting multiple users by sharing the available network resources. Such networks, which are usually multiple access networks, support communications for multiple users by sharing the available network resources. One example of such a network is the Universal Terrestrial Radio Access Network (UTRAN). The UTRAN is the radio access network (RAN) defined as a part of the Universal Mobile Telecommunications System (UMTS), a third generation (3G) mobile phone technology supported by the 3rd Generation Partnership Project (3GPP). Examples of multiple-access network formats include Code Division Multiple Access (CDMA) networks, Time Division Multiple Access (TDMA) networks, Frequency Division Multiple Access (FDMA) networks, Orthogonal FDMA (OFDMA) networks, and Single-Carrier FDMA (SC-FDMA) networks.

A wireless communication network may include a number of base stations or node Bs that can support communication for a number of user equipments (UEs). A UE may communicate with a base station via downlink and uplink. The downlink (or forward link) refers to the communication link from the base station to the UE, and the uplink (or reverse link) refers to the communication link from the UE to the base station.

A base station may transmit data and control information on the downlink to a UE and/or may receive data and control information on the uplink from the UE. On the downlink, a transmission from the base station may encounter interference due to transmissions from neighbor base stations or from other wireless radio frequency (RF) transmitters. On the uplink, a transmission from the UE may encounter interference from uplink transmissions of other UEs communicating with the neighbor base stations or from other wireless RF transmitters. This interference may degrade performance on both the downlink and uplink.

As the demand for mobile broadband access continues to increase, the possibilities of interference and congested networks grows with more UEs accessing the long-range wireless communication networks and more short-range wireless systems being deployed in communities. Research and development continue to advance the UMTS technologies not only to meet the growing demand for mobile broadband access, but to advance and enhance the user experience with mobile communications.

The patent application US 2005 / 0 153 692 A1 provides a method and system for providing information on mobile communication network WLAN interworking. In the mobile communication network WLAN interworking system, interworking WLAN information is broadcast from a mobile communication network to a dual terminal, which has a mobile communication network interface and a WLAN interface. Upon receipt of a broadcasting message including information on an interworking WLAN, the dual terminal turns on its WLAN module and periodically scans for a nearby WLAN in a power save mode. Upon receipt of a broadcasting message including no interworking WLAN information, the dual terminal turns off the WLAN module.

US 2011 / 0 222 523 A1 describes a method of multi-radio interworking to provide integrated cellular and WLAN access for a multi-radio device. A serving base station in a cellular network first obtains wireless local area network (WLAN) information and then forwards the WLAN information to a serving device such that the serving device is capable to connect with both the cellular network and a WLAN. The WLAN information may comprise scanning information, WLAN QoS information, WLAN layer-3 information, or additional WLAN access point information. The WLAN information is forwarded based on triggering events associated with the serving base station information, WLAN coverage information, or the serving device information. Based on the received WLAN information, when entering WLAN coverage, the serving device activates its WLAN access to forward traffic from the cellular access network to the WLAN access network. When leaving WLAN coverage, the serving devices deactivates its WLAN access to save power consumption.

US 2004 / 0 205 158 A1 describes a method and apparatus for detection and selection of wireless local area network (WLAN) service. A remote device includes a preference database for storing selection criteria for a plurality of access media. Access medium detector(s) determine accessibility of access media, and a selector selects one of the access media based on the selection criteria. The selection criteria indicate when on which to switch between access media.

US 2012 / 0 178 448 A1 relates to a method for transmitting and receiving data via a first base station supporting a first radio access technology (RAT) and a second base station supporting a second RAT in a radio access system supporting a multi-radio access technology, and the method may include allowing the first base station to perform a registration procedure with the second base station; and allowing the first base station to transmit control information required for accessing the second base station to a terminal supporting multi-RAT (multi-RAT terminal), wherein the control information comprises beacon frame transmission timing information of the second base station, and the beacon frame transmission timing is maintained in transmission timing of a downlink frame or downlink sub-frame of the first base station with relative timing offset interval.

The document of Alcatel Lucent: Wi-Fi Roaming - Building on ANDSF and Hotspot2.0", pages 1-45, XP002677915, describe the need for Heterogeneous Network Policies in a multi-operator environment. It analyzes how new standards like the 3GPP Access Network Discovery and Selection Function (ANDSF) and the Hotspot2.0 initiated can complement each other to meet those needs whilst identifying a number of use-case scenarios where further standard work is required. ANDSF is a cellular technology which allows an operator to provide a list of preferred access networks with policies for their use up to granularity of a single IP flow of all traffic for a given PDN (Packet Data Network) network (APN, Access Point Name). IEEE 80211u and WFA Hotspot2.0 are Wi-Fi technology standards that allow devices to more easily discover Wi-Fi roaming relationships, determine access point capabilities and loading conditions, and more easily connect to Wi-Fi network securely. The combination of ANDSF and Hotspot2.0 is a particularly powerful enabler for pain-free user experience across Wi-Fi and cellular networks. The analysis identifies some proposals for further discussion outlines potential contributions to the relevant standard bodies that could improve the user and operator experience of heterogeneous networks.

### SUMMARY

Various aspects of the present disclosure are directed to a method of wireless communication that includes receiving, at a mobile device, a management indication from a wide area wireless network (WWAN) to manage connectivity with a wireless local area network (WLAN), wherein the management indication may be either an indication for the mobile device to discover access points in the WLAN or an indication for the mobile device to associate with an access point in the WLAN. The method also includes obtaining, by the mobile device, a status of a WLAN radio of the mobile device and determining, by the mobile device, whether to process the management indication based on the status.

Additional aspects of the present disclosure are directed to a method of wireless communication that includes receiving, at a mobile device, a dynamic indication from a WWAN to offload data to a WLAN associated with the mobile device, suspending application of a current network offload policy at the mobile device based on the indication, wherein the current network offload policy was received at the mobile device from a core network (CN), and transmitting data to the WLAN in response to the dynamic indication.

Additional aspects of the present disclosure are directed to an apparatus configured for wireless communication that includes means for receiving, at a mobile device, a management indication from a WWAN to manage connectivity with a WLAN, wherein the management indication comprises either an indication for the mobile device to discover access points in the WLAN, an indication for the mobile device to associate with an access point in the WLAN, or an indication for the mobile device to offload traffic to the WLAN. The apparatus also includes means for obtaining, by the mobile device, a status of a WLAN radio of the mobile device and means for determining, by the mobile device, whether to process the management indication based on the status.

Additional aspects of the present disclosure are directed to an apparatus configured for wireless communication that includes means for receiving, at a mobile device, a dynamic indication from a WWAN to offload data to a WLAN associated with the mobile device, means for suspending application of a current network offload policy at the mobile device based on the indication, wherein the current network offload policy was received at the mobile device from a CN, and means for transmitting data to the WLAN in response to the dynamic indication.

In other aspects, a computer program product for wireless communications in a wireless network includes a non-transitory computer-readable medium having program code recorded thereon. The program code includes code for causing at least one computer to receive, at a mobile device, a management indication from a WWAN to manage connectivity with a WLAN, wherein the management indication comprises either an indication for the mobile device to discover access points in the WLAN, an indication for the mobile device to associate with an access point in the WLAN, or an indication for the mobile device to offload traffic to the WLAN. The program code also includes code for causing at least one computer to obtain, by the mobile device, a status of a WLAN radio of the mobile device and code for causing at least one computer to determine, by the mobile device, whether to process the management indication based on the status.

In other aspects, a computer program product for wireless communications in a wireless network includes a non-transitory computer-readable medium having program code recorded thereon. The program code includes code for causing at least one computer to receive, at a mobile device, a dynamic indication from a WWAN to offload data to a WLAN associated with the mobile device, code causing at least one computer to suspend application of a current network offload policy at the mobile device based on the indication, wherein the current network offload policy was received at the mobile device from a CN, and code causing at least one computer to transmit data to the WLAN in response to the dynamic indication.

In still other aspects, an apparatus configured for wireless communication has at least one processor and a memory coupled to the at least one processor. The processor is configured to receive, at a mobile device, a management indication from a WWAN to manage connectivity with a WLAN wherein the management indication comprises either an indication for the mobile device to discover access points in the WLAN, an indication for the mobile device to associate with an access point in the WLAN, or an indication for the mobile device to offload traffic to the WLAN. The processor is further configured to obtain, by the mobile device, a status of a WLAN radio of the mobile device and to determine, by the mobile device, whether to process the management indication based on the status.

In still other aspects, an apparatus configured for wireless communication has at least one processor and a memory coupled to the at least one processor. The processor is configured to receive, at a mobile device, a dynamic indication from a WWAN to offload data to a WLAN associated with the mobile device, to suspend application of a current network offload policy at the mobile device based on the indication, wherein the current network offload policy was received at the mobile device from a CN, and to transmit data to the WLAN in response to the dynamic indication.

### BRIEF DESCRIPTION OF THE DRAWINGS

FIG. 1 is a diagram illustrating a multiple access wireless communication system according to one aspect of the present disclosure.
FIG. 2 is a block diagram illustrating an exemplary transmitter and receiver configured according to one aspect of the disclosure.
FIG. 3 is a block diagram illustrating components of a wireless device such as may be employed within the wireless communication system illustrated in FIG. 1.
FIG. 4 is a block diagram illustrating a multi-mode UE that may support LTE for broadband data services and code division multiple access (CDMA) for voice services.
FIG. 5 is a functional block diagram illustrating example blocks executed to implement one aspect of the present disclosure.
FIGs. 6A-6C are block diagrams illustrating a UE configured according to one aspect of the present disclosure.
FIG. 7 is a call flow diagram illustrating a UE configured according to one aspect of the present disclosure.
FIG. 8 is a functional block diagram illustrating example blocks executed to implement one aspect of the present disclosure.
FIG. 9 is a call flow diagram illustrating a UE configured according to one aspect of the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), CDMA2000, etc. UTRA includes Wideband-CDMA (W-CDMA) and Low Chip Rate (LCR). CDMA2000 covers IS-2000, IS-95, and IS-856 standards. A TDMA network may implement a radio technology such as Global System for Mobile Communications (GSM). An OFDMA network may implement a radio technology such as Evolved UTRA (E-UTRA), IEEE 802.11, IEEE 802.16, IEEE 802.20, Flash-OFDM®, etc. UTRA, E-UTRA, and GSM are part of Universal Mobile Telecommunication System (UMTS). Long Term Evolution (LTE) is an upcoming release of UMTS that uses E-UTRA. UTRA, E-UTRA, GSM, UMTS, and LTE are described in documents from an organization named "3rd Generation Partnership Project" (3GPP). CDMA2000 is described in documents from an organization named "3rd Generation Partnership Project 2" (3GPP2).

Single carrier frequency division multiple access (SC-FDMA) is a transmission technique that utilizes single carrier modulation at a transmitter side and frequency domain equalization at a receiver side. The SC-FDMA has similar performance and essentially the same overall complexity as those of OFDMA system. However, SC-FDMA signal has lower peak-to-average power ratio (PAPR) because of its inherent single carrier structure. The SC-FDMA has drawn great attention, especially in the uplink communications where lower PAPR greatly benefits the mobile terminal in terms of transmit power efficiency. It is currently a working assumption for uplink multiple access scheme in the 3GPP LTE and the Evolved UTRA.

An access point ("AP") may comprise, be implemented as, or known as NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

An access terminal ("AT") may comprise, be implemented as, or known as an access terminal, a subscriber station, a subscriber unit, a mobile station, a remote station, a remote terminal, a user terminal, a user agent, a user device, user equipment ("UE"), a user station, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), an entertainment device (e.g., a music or video device, or a satellite radio), a global positioning system device, or any other suitable device that is configured to communicate via a wireless or wired medium. In some aspects, the node is a wireless node. Such wireless node may provide, for example, connectivity for or to a network (e.g., a wide area network such as the Internet or a cellular network) via a wired or wireless communication link.

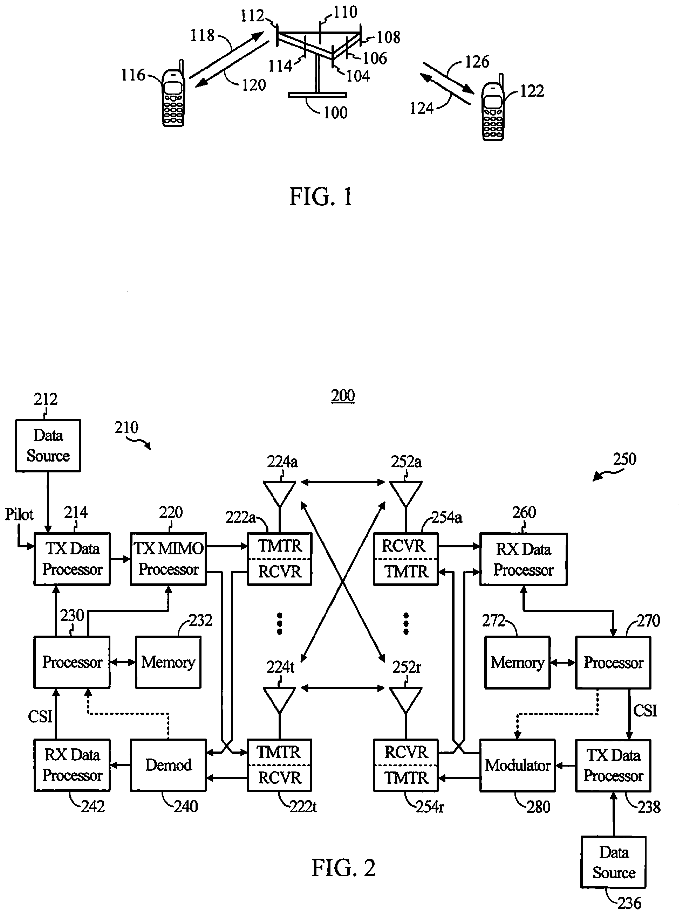

Referring to FIG. 1, a multiple access wireless communication system according to one aspect is illustrated. A base station 100 may include multiple antenna groups, one group including antennas 104 and 106, another group including antennas 108 and 110, and an additional group including antennas 112 and 114. In FIG. 1, only two antennas are shown for each antenna group, however, more or fewer antennas may be utilized for each antenna group.

A user equipment (UE) 116 may be in communication with base station 100 via antennas 112 and 114, where antennas 112 and 114 transmit information to UE 116 over forward link 120 and receive information from UE 116 over reverse link 118. UE 122 may be in communication with base station 100 via antennas 106 and 108, where antennas 106 and 108 transmit information to UE 122 over forward link 126 and receive information from UE 122 over reverse link 124. In a FDD system, communication links 118, 120, 124, and 126 may use different frequency for communication. For example, forward link 120 may use a different frequency then that used by reverse link 118.

Each group of antennas and/or the area in which they are designed to communicate may be referred to herein as a cell or sector of the access point. In one aspect of the present disclosure, each antenna group may be designed to communicate to UEs in a sector of the areas covered by base station 100. In communication over forward links 120 and 126, the transmitting antennas of base station 100 may utilize beamforming in order to improve the signal-to-noise ratio of forward links for the different UEs 116 and 122. Also, a base station using beamforming to transmit to UEs scattered randomly through its coverage causes less interference to UEs in neighboring cells than a base station transmitting through a single antenna to all its UEs.

As described herein, base station 100 may operate as part of a cellular or wide area wireless network (WWAN), such as an LTE communication network, and may direct the operation of UEs 116, 122 with respect to wireless local area networks (WLANs). For instance, base station 100 may configure UEs 116,122 to measure and report information about WLAN signals and may provide management indications with respect to such WLANs. Such management indications may relate to WLAN discovery and/or association.

FIG. 2 illustrates a block diagram of an aspect of a transmitter system 210 (which may be a base station, access point, etc.) and a receiver system 250 (which may be a user equipment, access terminal, etc.) in a wireless communication system 200. Each system 210, 250 includes a transmit (TX) chain and a receive (RX) chain comprising elements for sending and receiving signals, respectively. Although not shown, transmitter 210 and receiver 250 may include multiple RF chains to support concurrent WWAN and WLAN communications.

At the transmitter system 210, traffic data for a number of data streams is provided from a data source 212 to a transmit (TX) data processor 214 which forms part of the TX chain providing means for sending signals to the receiver system 250. Each data stream may be transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions executed by processor 230. Memory 232 may store data and software for the transmitter system 210.

The modulation symbols for all data streams continue through the TX chain and can be provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain aspects of the present disclosure, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals may be received by *N_{R}* antennas 252a through 252r and the received signal from each antenna 252 may be provided to a respective receiver (RCVR) 254a through 254r. Each receiver 254 may condition (e.g., filters, amplifies, and downconverts) a respective received signal, digitize the conditioned signal to provide samples, and further process the samples to provide a corresponding "received" symbol stream and couple to other elements of the RX chain for processing the received signals.

An RX data processor 260 receives and processes the *N_{R}* received symbol streams from the *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 may be complementary to that performed by TX MIMO processor 220 and TX data processor 214 at transmitter system 210.

A processor 270 directs the operation of receiver system 250. With MIMO operations, processor 270 periodically determines which pre-coding matrix to use and formulates a reverse link message comprising a matrix index portion and a rank value portion. Memory 272 may store data and software for the receiver system 250. The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

Processor 270 may also direct operations of receiver system 250 such as camping on a cell of wireless communication system 100, entering connected mode with base station 100, performing mobility related procedures, etc. These operations may include monitoring and reporting. For example, as described herein, processor 270 may monitor the status of a WLAN radio, receive management indications from a WWAN transmitter system, and process the management indications accordingly.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights, and then processes the extracted message.

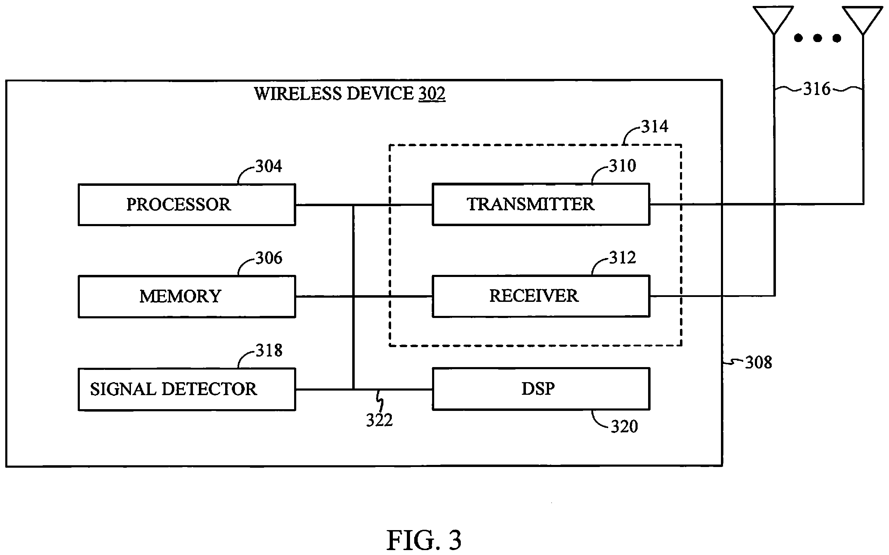

FIG. 3 illustrates various components that may be utilized in a wireless device 302 that may be employed within the wireless communication system illustrated in FIG. 1. The wireless device 302 is an example of a device that may be configured to implement the various methods described herein. The wireless device 302 may be a base stations 100, 210 or any of user terminals 116, 122, and 250.

The wireless device 302 may include a processor 304 that controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single or a plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus. A user may interact with wireless device 302 and control its operation. In some aspects, a wireless device 302 may receive user input regarding connection preferences, preferred networks, wireless local area network credentials and configurations, etc.

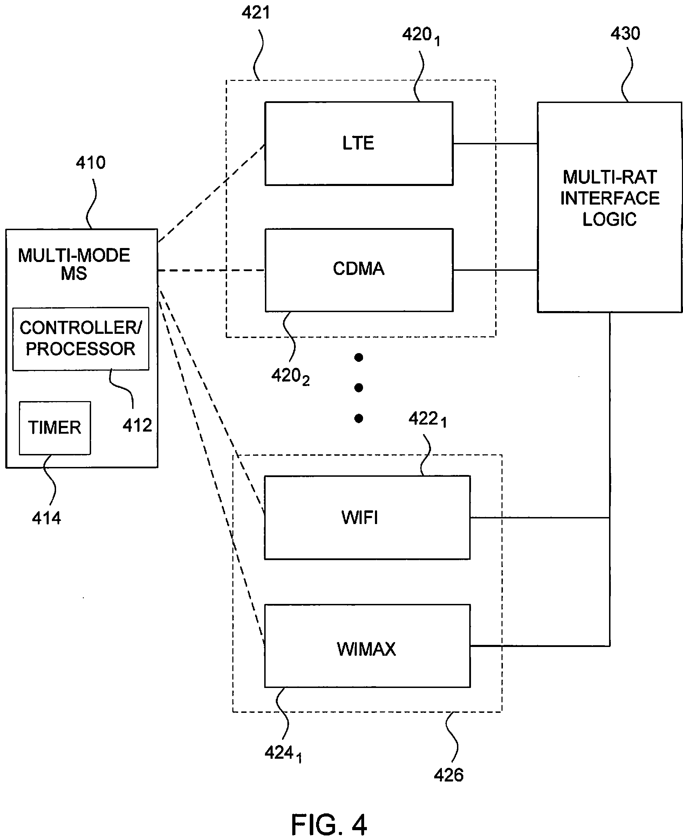

In order to expand the services available to subscribers, some UEs support communications with multiple radio access technologies (RATs) for both wireless wide area network (WWAN) and wireless local area network (WLAN) communications. For example, as illustrated in FIG. 4, a multi-mode UE 410 may support LTE for broadband cellular/WWAN data services, code division multiple access (CDMA) for cellular/WWAN voice services, and a short-range WLAN, such as WIFI™, WIMAX™, BLUETOOTH®, and the like, for direct access to Internet protocol (IP) networks. Illustratively, LTE is shown as a first RAT 420₁, CDMA is shown as a second RAT 420₂, WIFI™ is shown as a third RAT 422₁, and WIMAX™ is shown as a fourth RAT 424₁. RATs 420₁ and 420₂ make up part of the WWAN radios 421 of multi-mode UE 410, while RATs 422₁ and 424₁, make up part of the WLAN radios 426 of multi-mode UE 410.

In certain applications, multi-RAT interface logic 430 may be used by controller/processor 412 to exchange information between both long-range (wide area) and short-range (local area) RATs. This may enable a network provider to control how (through which RAT) an end user of the multi-mode UE 410 actually connects to the network. For example, controller/processor 412 may, through execution of interface logic 430 and, in some aspects, operation of timer 414, support local IP connectivity or IP connectivity to a core network.

For example, a network provider may be able to direct the multi-mode UE to connect to the network via short-range RAT, when available. This capability may allow a network provider to route traffic in a manner that eases congestion of particular air resources. In effect, the network provider may use short-range RATs to distribute some air traffic (of a long-range RAT) into a wireline network or to distribute some air traffic from a congested wireless network to a less congested wireless network. The traffic may be re-routed from the short-range RAT when conditions mandate, such as when a mobile user increases speed to a certain level not suitable for a short-range RAT.

Further, since long-range RATs are typically designed to provide service over several kilometers, the power consumption of transmissions from a multi-mode UE when using a long-range RAT is non-trivial. In contrast, short-range RATs (e.g., WIFI™, WIMAX™, or the like) are designed to provide service over several hundred meters. Accordingly, utilizing a short-range RAT when available may result in less power consumption by the multi-mode UE 410 and, consequently, longer battery life.

Existing interoperability between the WWAN and WLAN communication networks generally reflects an independence between the two network types. The data or user planes for WWAN and WLAN communications essentially operated independently of one another through multi-mode UEs. A multi-mode UE will typically use a different IP address for accessing the data plane through WWAN communication than it does to access the data plane through WLAN communication. A large number of WLAN access points, hotspots, WIFI™ zones, and the like, around the world are operated and maintained separately from WWAN service provider networks. Such non-operator WLANs may be established at a home residence, a business, a governmental entity, or the like. The relative low cost of the hardware and network access has made such WLAN networks almost ubiquitous. Users of multi-mode UEs may, thus, routinely access various data networks through WLAN communications without much consideration of the WWAN network operated by their communication service providers.

Because of the general operational independence of the WLAN networks, the offload policies and procedures that have been developed to regulate the interoperability between WWAN and WLAN communications for UEs having data to deliver have typically reflected this independence. In general, there have been no facilities in such existing policies and procedures that provide dynamic control of network selection to any of the operating RANs. Access network discover and selection function (ANDSF) is an operational entity within the evolved packet core (EPC) of 3GPP networks that assists UEs to discover WLAN networks, such as WIFI™, WIMAX™, and the like, that can be used for data communication in addition to the WWAN data access networks. ANDSF can provide the following information to a UE, based on operator configuration: (1) inter-system mobility policy (ISMP)- network selections rules for a UE with no more than one active access network connection (e.g., either LTE or WIFI™); (2) inter-system routing policy (ISRP) - network selection rules for a UE with potentially more than one active access network connection (e.g., both LTE and Wi-Fi). Such a UE may employ IP flow mobility (IFOM), multiple-access PDN connectivity (MAPCON), or non-seamless WIFI™ offload according to operator policy and user preferences; and (3) discovery information - a list of networks that may be available in the vicinity of the UE and information assisting the UE to expedite the connection to these networks.

ANDSF provides rules and policies from the core network to the UE that assist the UE in selecting and policing connections to those networks. ANDSF may also provide a list of networks that may be available to the UE and information that may assist in establishing connection. The UE will determine the order in which to attempt to connect for data communication based on the priority and rules provided by ANDSF.

Such priorities may be supplemented by device configuration and user preferences. For example, when the battery is low in a UE, the UE may be configured to shut off the WLAN radios. Thus, when attempting data communication, the UE may proceed directly to the WWAN data plane. In an additional example, the user may prefer to connect to a home or work WLAN network rather than another available WLAN network. Thus, the priorities list for WLAN mobility would include the home or work WLAN having a higher priority. Additionally, the rules and policies provided by the network, such as ANDSF, are relatively static in nature in current implementations. Other than the modifications based on the user preference or device configuration, the rules and policies do not generally change based on dynamic conditions. Systems have been suggested that describe WLAN mobility based on dynamic policies from the RAN and processes for the RAN to dynamically direct the UE to take and report WLAN measurements. However, additional considerations exist with regard to handling interactions between the new dynamic RAN-based behaviors and the existing legacy behaviors of the UE with regard to WLAN mobility.

There are now two types of WLAN deployments to consider: operator-controlled WLAN networks, and non-operator-controlled WLAN networks. Operator-controlled WLAN networks are sets of WLAN access points that are associated with a particular WWAN service provider (e.g., AT&T, Verizon, T-Mobile, Boingo, and the like). These operator-controlled WLAN networks may be owned and managed by such service providers or owned and managed by other entities and simply associated with the service providers. Non-operator-controlled WLAN networks are various WLAN access points that are independent from WWAN service providers. For example, a home WIFI™ network, a business hotspot, or the like, may be a non-operator-controlled WLAN networks.

The various behaviors of WLAN mobility to address generally concern the procedures of discovery, association, and offload policies (e.g., identifying the particular IP flows, bearers, or access point name (APN) traffic to offload to the WLAN). The discovery and association processes share similar behaviors that surround the management of the connectivity between the UE and the WLAN. Thus, as described herein, connectivity management may include the initial search behaviors, when the UE searches for particular WLAN access points and association behaviors, when the WLAN access points are identified, but the UE has not yet been associated with the particularly identified access point.

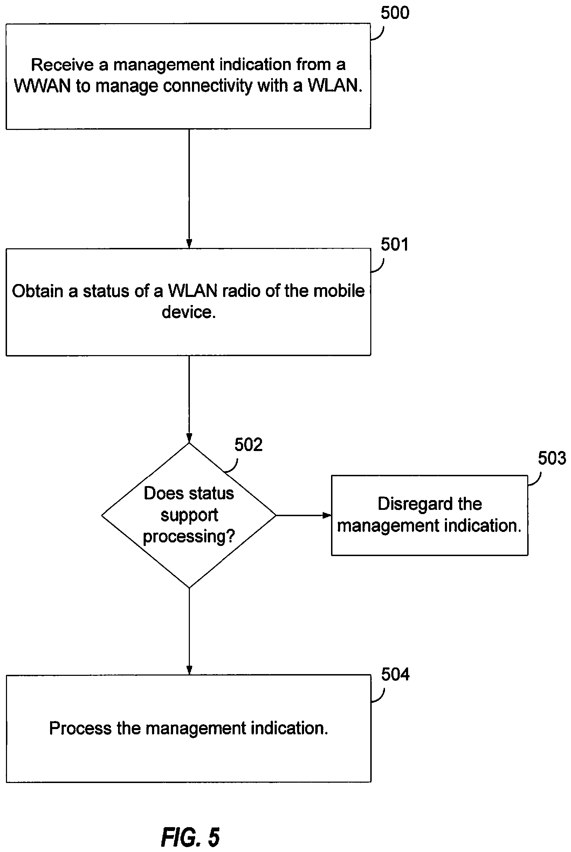

FIG. 5 is a functional block diagram illustrating example blocks executed to implement one aspect of the present disclosure. At block 500, a UE receives a management indication from the associated WWAN to manage connection with the WLAN network. The UE is in a connected state with communication active between the UE and WWAN base station. The WWAN base station communicates the management indication as a part of the connected communication. The management indication may indicate for the UE to search for or discover the access points in the WLAN, or may indicate for the UE to associate with an identified access point in the WLAN, or may indicate specific traffic for the UE to offload to the WLAN. The context of the management indication will depend on what stage, discovery vs. association, the UE and WWAN base station are in with regard to the WLAN mobility decision.

At block 501, the UE obtains a status of its internal WLAN radio. While the default state of a WLAN radio in a UE is typically an active/on state, the user is capable of manually deactivating or switching the radio off. Moreover, if the battery is low in the UE, the device may be configured to switch off the WLAN radio automatically in order to conserve power. Thus, the status of the WLAN radio may correspond to a sleep (power saving) mode, a deactivated (power off) state, a scanning or discovery state, etc. Furthermore, when the WLAN radio is on or active, it may already be connected or associated with a WLAN access point. Considering the alternative situations, the status of the UE's WLAN radio may be active and associated/connected to a first WLAN network, for example an operator-controlled WLAN, or may be active and associated/connected to another or second WLAN network, for example, a non-operator-controlled WLAN.

At block 502, a determination is made whether the status of the internal WLAN radio supports the UE processing the management indication from the WWAN. If the WLAN radio is switched off, then, in aspects of the present disclosure, the status would not support processing or carrying out the management indication received from the WWAN. In alternative aspects, if the radio is switched off, a management indication may include an instruction for the UE to re-activate the WLAN radio. If the WLAN radio is active, but idle, then in other aspects of the present disclosure, the status would support processing the management indication. Various different rules and policies may be established which influence whether the UE processes a management indication which are at least partly based on the status of the WLAN radio. For example, in one aspect, a rule may provide that a WLAN radio status of active and already associated with a non-operator-controlled WLAN may not support processing the management indication, while, in another aspect, the rule may provide that such an active/associated with a non-operator-controlled WLAN may support processing the management indication by disassociating the UE from the non-operator-controlled WLAN and associating it, instead, to an operator-controlled WLAN identified in the management indication, for instance, if use of the operator-controlled WLAN network is more beneficial to the user.

If the status of the internal WLAN radio does not support processing the management indication received from the WWAN base station, then, at block 503, the UE disregards the management indication. In some aspects, the UE is already operating under the legacy behaviors established and received from the core network. In such aspects, the UE determines that the status of its WLAN radio does not support processing the indication and continues to implement the rules and policies already in place.

When the status of the internal WLAN radio supports processing the management indication, then, at block 504, the UE processes the management indication. The management indication may indicate for the UE to perform discovery or to associate with a particular access point of the WLAN network. In some aspects, as referenced above, the UE may already have been operating under legacy behaviors established by the core network and received by the UE from the core network in a formal offload policy. In such aspects, when the status of the WLAN radio supports processing, the UE may disregard or suspend operation of the legacy behaviors and begin to perform the behaviors identified by the WWAN base station. In various aspects of the present disclosure, the UE would then continue to operate under the WWAN-based management indications until an expiration event occurs. An expiration event may be one or a combination of the UE receiving another management indication from a WWAN base station, the UE entering an idle state, expiration of a timer (e.g., timer 414 of FIG. 4) or predetermined period of time, leaving the coverage area of the WWAN base station, or the like.

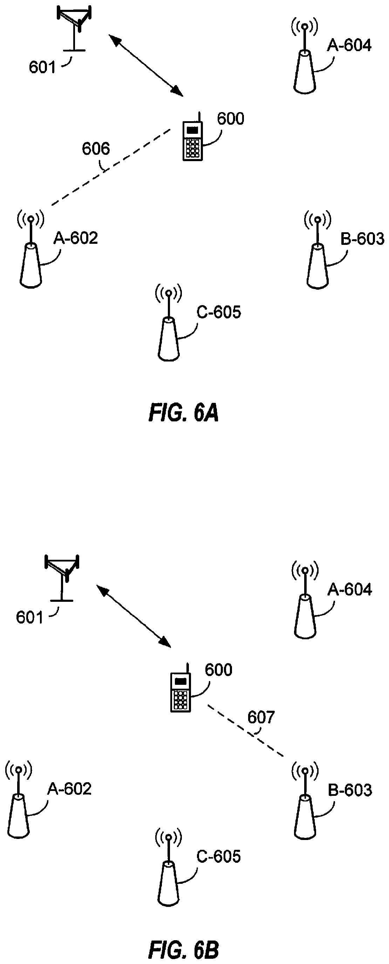

FIG. 6A is a block diagram illustrating a UE 600 configured according to one aspect of the present disclosure. UE 600 is in a connected mode engaging in communication with eNB 601 of a WWAN. UE 600 is also located within the coverage areas of WLAN access points A-602, B-603, A-604, and C-605. WLAN access points A-602 and A-604 are operator-controlled WLAN access points as they are associated with the service provider that operates the WWAN associated with eNB 601. WLAN access points B-603 and C-605 are non-operator-controlled WLANs as each are associated with other WLAN networks. For example, WLAN access point B-603 is a home WIFI™ access point at the home of the user of UE 600, and WLAN access point C-605 is a hotspot operated at a local coffee shop.

In an example operation illustrated by FIG. 6A, while UE 600 is in the connected mode with eNB 601, eNB 601 sends a measurement configuration to UE 600 directing UE 600 to measure the neighboring WLAN networks. In response to the measurement configuration, UE 600 obtains the status of its internal WLAN radio (not shown). UE 600 determines that its radio is active and that it has an association 606 with WLAN access point A-602. Because its radio is already associated with WLAN access point A-602, UE 600 determines that it will not perform the measurements according to the configuration. UE 600 may simply disregard the measurement configuration from eNB 601, or, in alternative aspects, UE 600 may respond to eNB 601. The response from UE 600 to eNB 601 may include the status of UE 600's WLAN radio in addition to an indication that action on the measurement configuration will not be taken.

In another alternative aspect of the present disclosure illustrated by FIG. 6A, in response to the measurement configuration received from eNB 601, UE 600 determines metrics for the WLAN access points based on the configuration and obtains the measurement, which it reports back to eNB 601. The measurement configuration may contain multiple pieces of information regarding the WLAN access points A-602, B-603, A-604, and C-605, such as the access point identifier, which may be any of a number of identifiers, including a service set identifier (SSID), a basic SSID (BSSID), a homogeneous extended SSID (HESSID), and other such WWAN network info. The measurement report may also include a frequency corresponding to the access points selected from frequency groups for WLAN channel number or operating class.

In response to the measurement report received from UE 600, eNB 601 decides to direct UE 600 to associate with WLAN access point A-604. Accordingly, eNB 601 transmits a management indication to UE 600 that directs UE 600 to establish association with WLAN access point A-604. The management indication transmitted to UE 600 may include identification information similar to the information that may be transmitted in the measurement report, including an identifier and frequency. In this example, the WLAN mobility policy for UE 600 may allow for measurement or discovery processing without making a determination of whether to process an indication based on the status of the internal WLAN radio. Thus, upon receiving the management indication to associate with WLAN access point A-604, however, UE 600 obtains the status of its internal WLAN radio. As noted in the previous example, UE 600 already has an association 606 with WLAN access point A-602. UE 600, therefore, determines that it will disregard the management indication received from eNB 601. Similarly, in various aspects of the present disclosure, UE 600 may not report back to eNB 601 after the determination, report the decision not to perform the management indication, or send a report that includes the status of the internal WLAN radio of UE 600 with or without the additional information that UE 600 will not be processing the management indication.

FIG. 6B illustrates UE 600 configured according to one aspect of the present disclosure. The aspect illustrated in FIG. 6B is almost the same as described in FIG. 6A, with the exception that UE 600 has an association with WLAN access point B-603. eNB 601 sends a management indication to UE 600. UE 600 then obtains the status of its internal WLAN radio in response to receiving the management indication. The status reflects that the WLAN radio is active and associated with WLAN access point B-603. In a first example operation illustrated by FIG. 6B, UE 600 determines that it is already associated with a WLAN access point B-603 and, therefore, it will not process the management indication. As noted above, UE 600 may or may not send the status of its WLAN radio to eNB 601 in a response to eNB 601.

In an alternative aspect of the present disclosure illustrated by FIG. 6B, the association policies that UE 600 operates with favors association or connection with operator-owned WLAN access points, such as WLAN access points A-602 and A-604. The management indication sent to UE 600 from eNB 601 includes the identifier of WLAN access point A-604 and its operating frequency. Upon obtaining the status of its internal WLAN radio as active and associated with home access point, WLAN access point B-603, determines that, based on its priority associations, it will disassociate with WLAN access point B-603 in favor of associating with WLAN access point A-604, as instructed in the management indication received from eNB 601.

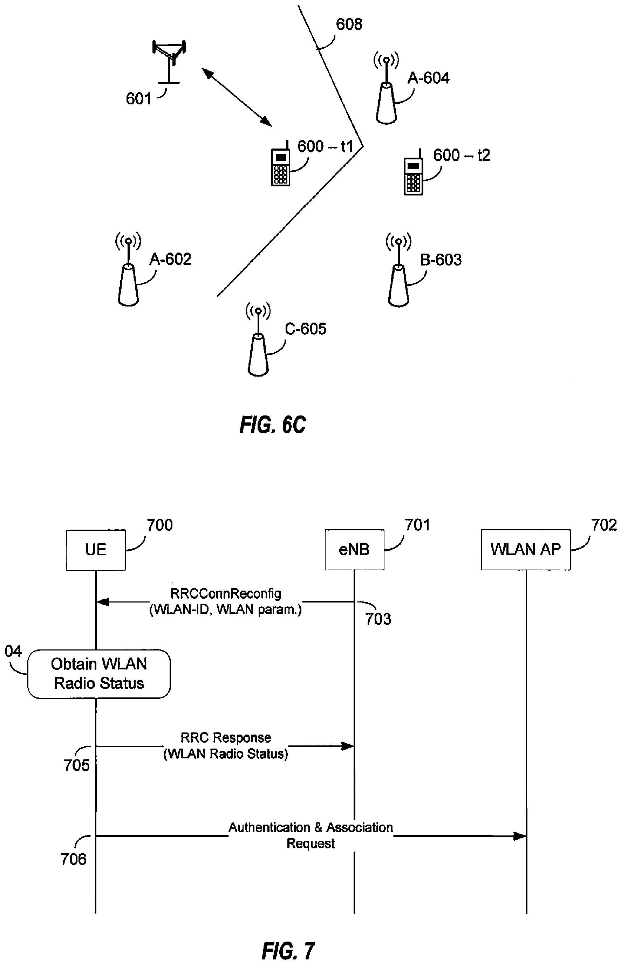

FIG. 6C illustrates UE 600 configured according to one aspect of the present disclosure. The aspect illustrated in FIG. 6C is almost the same as described in FIGs. 6A and 6B, with the exception that FIG. 6C also illustrates the boundary of coverage area 608. Coverage area 608 represents the area within which eNB 601 is able to reliably provide WWAN communication service. In one example operation illustrated by FIG. 6C, while located within coverage area 608, UE 600 receives a management indication from eNB 601. In response to this management indication, UE 600 obtains the status of its WLAN radio. In the described example aspect, the user of UE 600 has deactivated the WLAN radio. Accordingly, UE 600 determines that the status of its internal WLAN radio is off. Based on this status, UE 600 determines that it will not process the management indication. UE 600 reports to eNB 601 in a response message to the management indication that the status of its internal WLAN radio is off.

In another example operation illustrated by FIG. 6C, UE 600 is shown at two separate time instances, *t1* and *t2.* At *t1,* UE 600 is located within coverage area 608. Time, *t1,* is also after the time when UE 600 received a management indication from eNB 601, obtained the status of its WLAN radio, and determined to process the management indication according to the information provided therein. This information provided for UE 600 to associate with WLAN access point A-602, which is an operator-controlled access point. The management indication from eNB 601 provided a change from the network policy currently in place at UE 600, which would have preferred to associate with the home access point, WLAN access point B-603. Therefore, contrary to the network policy currently in place at UE 600, at time, *t1,* UE 600 is associated with WLAN access point A-602, as directed by the dynamic generation of management indication by eNB 601. For example, after detecting an increase in data load at eNB 601, eNB 601 determined that it could relieve congestion by directing UE 600 to offload data transmission to the operator-controlled, WLAN access point A-602.

The dynamic policy instituted by the management indication will remain in effect for a particular period, depending on the configuration of the dynamic WLAN mobility. In the aspect of the currently described example, the policy for dynamic WLAN mobility provides that the dynamic policy will remain in effect at least until UE 600 exits coverage area 608. UE 600 may determine when it has exited coverage area 608 through detection of a new cell identifier, a new tracking area (TA) identifier, or a new public land mobile network (PLMN) identifier associated with the WWAN. At time, *t2*, UE 600 detects the cell identifier of its currently serving WWAN cell has changed. Accordingly, UE 600 disregards the dynamic policy put in place by the management indication from eNB 601 and reinstates the network policy. With the network policy back in place, UE 600 initiates association with its home access point, WWLAN access point B-603.

In another example operation illustrated by FIG. 6C, the configuration of the dynamic WLAN mobility provides that any dynamic policies defined in management indications will expire after a predetermined period of time, such as, for instance, on the expiration of a timer (e.g., timer 414 of FIG. 4) triggered on receipt of the indication. As illustrated, the timer expires at time, *t2*. Accordingly, the dynamic policy in place due to the management indication expires, causing UE 600 to reinstitute the current network policy.

The dynamic policy may also expire when UE 600 enters into an idle state. Various aspects of the present disclosure provide for configuration of dynamic WLAN mobility to restrict the application of dynamic policies for periods when UE 600 is in a connected mode. Similarly, a current dynamic policy may be superseded on receipt of a new management indication instituting a new dynamic policy. The various aspects of the present disclosure are not limited to any one or combination of such configurations for application of dynamic WLAN mobility.

FIG. 7 is a call flow diagram illustrating a UE 700 configured according to one aspect of the present disclosure. As illustrated, UE 700 is in a connected mode engaging in communication through eNB 701. ENB 701 determines that UE 700 should offload traffic to a nearby WLAN network. This determination may be made by eNB 701 based on a number of different factors, including a measurement report received from UE 700, changing environmental conditions, changing quality of the connection to a different WLAN access point, increase load at eNB 701, and the like. Once eNB 701 makes this determination, a management indication is sent at point 703 by eNB 701 using an RRC connection reconfiguration message. The RRC message may contain identification and connection information for UE 700, including the identifier of the WLAN access point to which eNB 701 is directing UE 700 to connect (i.e., WLAN access point 702), frequency of WLAN access point 702, and other similar WLAN parameters.

UE 700 receives the RRC message with the management indication and obtains the status of its internal WLAN radio at point 704. At point 705, UE 700 transmits a response message through the RRC layer back to eNB 701. The response message is sent in response to the management indication and includes various information, such as the WLAN radio status of UE 700. UE 700 determines that, based on the current status of its internal radio, it will process the request by establishing association with WLAN access point 702. At point 706, UE 700 transmits an authentication and association request to WLAN access point 702.

It should be noted that, while FIG. 7 illustrates the WLAN mobility communication occurring between UE 700 and eNB 701 uses RRC messages, other similar types of communication layers may be used. For example, instead of RRC messages, eNB 701 and UE 700 may communicate the WLAN mobility messages over non-access stratum (NAS) layer messaging. The various aspects of the present disclosure are not limited to any one particular communication layer when executing actions implemented within the spirit of the disclosure.

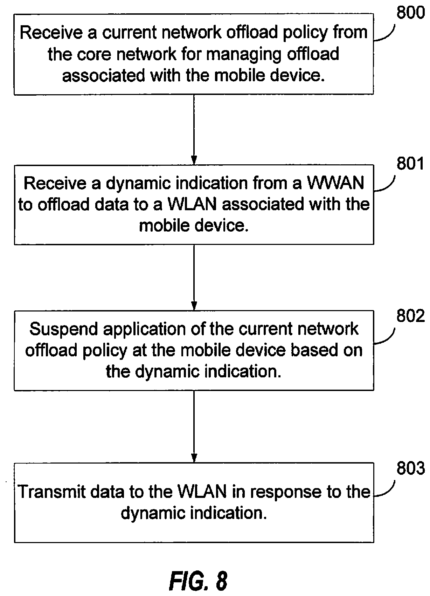

Additional aspects of the present disclosure may provide dynamic offloading policies that are automatically employed by the mobile devices, without determination and selection by the mobile device. FIG. 8 is a functional block diagram illustrating example blocks executed to implement one aspect of the present disclosure. At block 800, the mobile device receives a set of network offload policies from the core network. The mobile device will then operate under these offload policies from the core network until the core network changes any of the policies. At block 801, the mobile device receives a dynamic indication from a WWAN to offload data to a WLAN associated with the mobile device. This dynamic indication indicates offloading to a WLAN that would not necessarily be included in the current network offload policy. Thus, if the mobile device were to offload data under the current network offload policy without the dynamic indication, it may not attempt to offload to that particular WLAN. The dynamic indication may include a variety of information for the mobile device. For example, the indication may include the identifier (e.g., SSID, BSSID, HESSID, and the like) of the WLAN access point to which the mobile device is being directed. The indication may also include identification of the specific data traffic that the mobile device is to offload to the WLAN network, such information identifying the IP flows, bearers, access point name (APN) traffic, or the like.

At block 802, the mobile device suspends application of any current network offload policy from the core network in response to receiving the dynamic indication. As noted, the mobile device will typically receive a network offload policy, for example, through ANDSF, from the core network. The ANDSF will establish a basic set of priorities, policies, and rules to use for WLAN mobility decisions. With the current network offload policy suspended, the mobile device will begin to transmit data, at block 803, to the designated WLAN in response to the dynamic indication. The current network offload policies from the core network are still available at the mobile device, but only suspended. When an ending event may occur for the dynamic offload indication, the mobile device may reinstate the current offload policies and operate under the core network policies again as before.

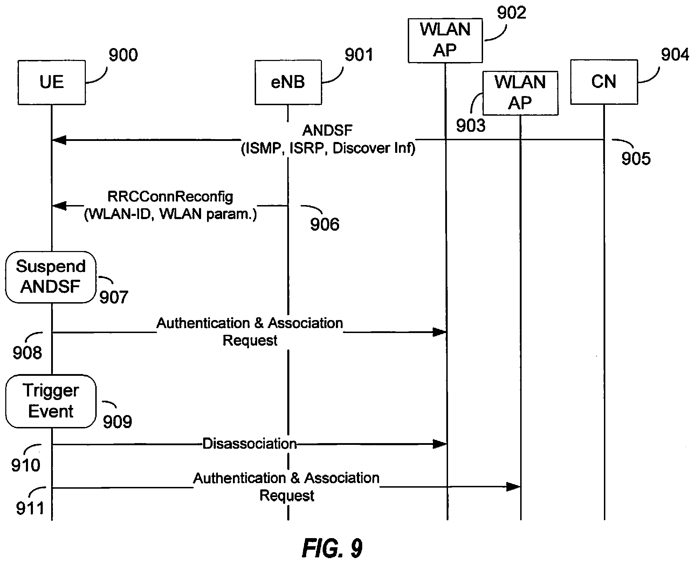

FIG. 9 is a call flow diagram illustrating a UE 900 configured according to one aspect of the present disclosure. UE 900 is currently communicating in a connected mode through eNB 901. At point 905, UE 900 receives the standard network offload policies via ANDSF received from core network 904, through eNB 901. UE 900 applies the various rules and priorities when making WLAN mobility decisions. At point 906, eNB 901 experiences changes in environmental conditions, either because of increased traffic or changes in the quality either of its own communication channels or of some of the WLAN networks that its associated UEs, such as UE 900, are connected with. For purposes of the described example, the network offload policy indicates a priority for offloading data traffic to the user of UE 900's home wireless network, serviced by WLAN access point 903. However, at point 906, eNB 901 detects a change in environmental conditions at WLAN access point 903 which is beginning to delay data communication from UE 900. Thus, in response to the changing conditions at WLAN access point 903, eNB 901 sends a dynamic indication to UE 900 that changes the offload policy priority from core network 904 to favor operator-controlled access points, such as WLAN access point 902, and moving priority of the home network, WLAN access point 903, to the lowest priority. This dynamic indication is sent by eNB 901 using an RRC connection reconfiguration message. As described previously, the RRC connection reconfiguration message may contain a variety of information, such as the WLAN identifier and other WLAN parameters to assist UE 900 in establishing association and connection with the identified access point.

Upon receipt of the dynamic indication, at point 907, UE 900 suspends application of the current network offload policies from the ANDSF received previously from core network 904. UE 900 will suspend application of the ANDSF routing policies, such as ISRP and/or ISMP. However, the remaining rules, information, and policies of ANDSF will remain applicable. In the described aspect, UE 900 does not send a response to eNB 901, but simply begins following the new policy defined by the dynamic indication. In response, therefore, to the dynamic indication, UE 900 transmits an authentication and association request, at point 908, to WLAN access point 902 to establish an association and connection. After point 908, UE 908 will then offload data communication to WLAN access point 902, instead of WLAN access point 903, which the network offload policy would have provided.

At point 909, a trigger event is detected which signals that the new policy defined by the dynamic indication has expired. Various types of events or lists of events may be configured to indicate expiration of the dynamic indication. For example, the dynamic indication may expire when UE 900 enters an idle state. The dynamic indication may also expire at the expiration of a predetermined period of time or a timer (e.g., timer 414 of FIG. 4) that was started on receipt of the dynamic indication. The trigger event may also be receiving a new dynamic indication from eNB 901. The dynamic indication may also expire when UE 900 exits the coverage are of eNB 901. Any one or a number of such events may define the expiration of a dynamic indication.

In response to the trigger event at point 909, UE 900 reinstates the network offload policy for use when making WLAN mobility decisions. As such, because the network offload policy places the home network, WLAN access point 903, as the highest priority for data offloading, UE 900 begins the re-association process, at point 910, by sending a disassociation message to WLAN access point 902. Once disassociated with WLAN access point 902, UE 900 then sends an authentication and association request, at point 911, to WLAN access point 903. After the UE 900 is re-associated with WLAN access point 903, it will begin transmitting data to WLAN access point 903 in accordance with the network offload policy.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The functional blocks and modules in FIGs. 5 and 8 may comprise processors, electronics devices, hardware devices, electronics components, logical circuits, memories, software codes, firmware codes, etc., or any combination thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, or digital subscriber line (DSL), then the coaxial cable, fiber optic cable, twisted pair, or are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the appended claims. Thus, the disclosure is not intended to be limited to the examples and designs described herein but is to be accorded the widest scope in accordance with the appended claims.

## Claims

1. A method of wireless communication, comprising:
receiving, at a mobile device (116, 122, 250, 302, 600, 700, 900), a standard offload policy via an access network discover and selection function, ANDSF, from a core network (904) to indicate a priority for offloading data to a wireless local area network, WLAN (903), associated with the mobile device (116, 122, 250, 301, 600, 700, 900); the method being **characterised by**
receiving, at the mobile device (116, 122, 250, 302, 600, 700, 900), a dynamic indication from a wireless wide area network, WWAN, access point (110, 210, 601, 701, 901) that changes the standard offload policy received from the core network (904);
suspending application of the standard network offload policy at the mobile device (116, 122, 250, 302, 600, 700, 900) based on the dynamic indication received from the WWAN access point (110, 210, 601, 701, 901); and
transmitting data to a second WLAN (902) in response to the dynamic indication from the WWAN access point (110, 210, 601, 701, 901).

2. The method of claim 1, further comprising one of:
reinstating application of the standard network offload policy in response to one of:
the mobile device (116, 122, 250, 302, 600, 700, 900) transitions to an idle state with respect to the WWAN access point (110, 210, 601, 701, 901);
expiration of a timer triggered upon the receiving of the dynamic indication;
receiving a new dynamic indication from the WWAN access point (110, 210, 601, 701, 901); and
the mobile device (116, 122, 250, 302, 600, 700, 900) exiting a coverage area of the WWAN access point (110, 210, 601, 701, 901); and
reporting measurements taken by the mobile device (116, 122, 250, 302, 600, 700, 900) of the second WLAN to the WWAN (110, 210, 601, 701, 901), wherein the dynamic indication is received from the WWAN access point (110, 210, 601, 701, 901) in response to the reported measurements.

3. The method of claim 1, wherein the dynamic indication includes an identifier for traffic to offload to the second WLAN.

4. The method of claim 1, further comprising: determining whether to suspend application of the standard network offload policy, wherein the determining whether to suspend includes determining whether the standard network offload policy comprises an indication whether it should receive the dynamic indication from the WWAN access point (110, 210, 601, 701, 901) when available.

5. The method of claim 1, wherein the dynamic indication comprises one of:
a radio resource control, RRC, message; and
a non-stratum, NAS, message.

6. The method of claim 1, further comprising determining, by the mobile device (116, 122, 250, 302, 600, 700, 900), whether to suspend application of a current network offload policy at the mobile device (116, 122, 250, 302, 600, 700, 900).

7. The method of claim 1, further comprising:
re-implementing the previous offload policy in response to one of:
the mobile device (116, 122, 250, 302, 600, 700, 900) transitions to an idle state with respect to the WWAN access point (110, 201, 601, 701, 901);
expiration of a timer triggered upon the receiving of the dynamic indication;
receiving a new dynamic indication from the WWAN access point (110, 201, 601, 701, 901); and
exiting a coverage area of the WWAN access point (110, 201, 601, 701, 901) by the mobile device (116, 122, 250, 302, 600, 700, 900).

8. An apparatus configured for wireless communication, comprising:
means for receiving, at a mobile device (116, 122, 250, 302, 600, 700, 900), a standard offload policy via an access network discover and selection function, ANDSF, from a core network (904) to indicate a priority for offloading data to a wireless local area network, WLAN (903), associated with the mobile device (116, 122, 250, 301, 600, 700, 900); the apparatus being **characterised by** comprising
means for receiving, at the mobile device (116, 122, 250, 302, 600, 700, 900), a dynamic indication from a wireless wide area network, WWAN, access point (110, 210, 601, 701, 901) that changes the standard offload policy received from the core network (904);
means for suspending application of the standard network offload policy at the mobile device (116, 122, 250, 302, 600, 700, 900) based on the dynamic indication received from the WWAN access point (110, 210, 601, 701, 901); and
means for transmitting data to a second WLAN (902) in response to the dynamic indication from the WWAN access point (110, 210, 601, 701, 901).

9. The apparatus of claim 8, further comprising one of:
means for reinstating application of the standard network offload policy in response to one of:
the mobile device (116, 122, 250, 302, 600, 700, 900) transitions to an idle state with respect to the WWAN access point (110, 210, 601, 701, 901);
expiration of a timer triggered upon the receiving of the dynamic indication;
receiving a new dynamic indication from the WWAN (110, 210, 601, 701, 901);
the mobile device (116, 122, 250, 302, 600, 700, 900) exiting a coverage area of the WWAN access point (110, 210, 601, 701, 901); and
means for reporting measurements taken by the mobile device (116, 122, 250, 302, 600, 700, 900) of the second WLAN to the WWAN access point (110, 210, 601, 701, 901), wherein the dynamic indication is received from the WWAN point (110, 210, 601, 701, 901) in response to the reported measurements.

10. The apparatus of claim 8, wherein the dynamic indication includes an identifier for traffic to offload to the second WLAN.

11. The apparatus of claim 8, further comprising:
means for determining whether to suspend application of the standard network policy, wherein the determining whether to suspend includes determining whether the standard offload policy comprises an indication of whether it should receive the dynamic indication from the WWAN access point (110, 210, 601, 701, 901) when available.

12. The apparatus of claim 8, further comprising means for determining, by the mobile device (116, 122, 250, 302, 600, 700, 900), whether to suspend application of a current network offload policy at the mobile device (116, 122, 250, 302, 600, 700, 900).

13. The apparatus of claim 8, further comprises: means for reporting measurements taken by the mobile device (116, 122, 250, 302, 600, 700, 900) of the second WLAN to the WWAN access point (110, 210, 601, 701, 901), wherein the dynamic indication is received from the WWAN access point (110, 210, 601, 701, 901) in response to the reported measurements.

14. A computer program for wireless communications in a wireless network, comprising:
a non-transitory computer-readable medium having program code recorded thereon, the program code causing an apparatus of a mobile device to perform the method of claims 1 to 7.

## Patentansprüche

1. Verfahren zur drahtlosen Kommunikation, umfassend:
Empfangen, an einem mobilen Gerät (116, 122, 250, 302, 600, 700, 900), eine Standard-Auslagerungsrichtlinie über eine Zugangsnetz-Erkennungs- und Auswahlfunktion, ANDSF, von einem Kernnetz (904), um eine Priorität für das Auslagern von Daten zu einem drahtlosen lokalen Netzwerk, WLAN (903), anzuzeigen, das dem mobilen Gerät (116, 122, 250, 301, 600, 700, 900) zugeordnet ist, wobei das Verfahren **gekennzeichnet ist durch**:
Empfangen, an dem mobilen Gerät (116, 122, 250, 302, 600, 700, 900), einer dynamischen Anzeige von einem drahtlosen Weitverkehrsnetz, WWAN, Zugangspunkt (110, 210, 601, 701, 901), die die vom Kernnetz (904) empfangene Standard-Entlastungsrichtlinie ändert;
Aussetzen der Anwendung der Standardnetzwerk-Entlastungsrichtlinie an dem mobilen Gerät (116, 122, 250, 302, 600, 700, 900) auf der Grundlage der von dem WWAN-Zugangspunkt (110, 210, 601, 701, 901) empfangenen dynamischen Anzeige; und
Übertragen von Daten an ein zweites WLAN (902) als Reaktion auf die dynamische Anzeige von dem WWAN-Zugangspunkt (110, 210, 601, 701, 901).

2. Verfahren nach Anspruch 1, ferner umfassend eines aus:
Wiedereinsetzen der Anwendung der Standardnetzwerk-Entlastungsrichtlinie als Reaktion auf eines von:
Übergang des mobilen Geräts (116, 122, 250, 302, 600, 700, 900) in einen Leerlaufzustand in Bezug auf den WWAN-Zugangspunkt (110, 210, 601, 701, 901);
Ablauf einer Zeitschaltuhr, die durch den Empfang der dynamischen Anzeige ausgelöst wurde;
Empfangen einer neuen dynamischen Anzeige von dem WWAN-Zugangspunkt (110, 210, 601, 701, 901); und
Verlassen eines Versorgungsbereichs des WWAN-Zugangspunkts (110, 210, 601, 701, 901) durch das mobile Gerät (116, 122, 250, 302, 600, 700, 900); und
Berichten von Messungen, die von dem mobilen Gerät (116, 122, 250, 302, 600, 700, 900) des zweiten WLANs vorgenommen wurden, an das WWAN (110, 210, 601, 701, 901), wobei die dynamische Anzeige von dem WWAN-Zugangspunkt (110, 210, 601, 701, 901) in Erwiderung auf die berichteten Messungen empfangen wird.

3. Verfahren nach Anspruch 1, wobei die dynamische Anzeige einen Identifikator für den auf das zweite WLAN auszulagernden Verkehr enthält.

4. Verfahren nach Anspruch 1, ferner umfassend: Bestimmen, ob die Anwendung der Standardnetzwerk-Entlastungsrichtlinie ausgesetzt werden soll, wobei das Bestimmen, ob ausgesetzt werden soll, das Bestimmen einschließt, ob die Standardnetzwerk-Entlastungsrichtlinie eine Anzeige umfasst, ob sie die dynamische Anzeige von dem WWAN-Zugangspunkt (110, 210, 601, 701, 901) empfangen soll, wenn diese verfügbar ist.

5. Verfahren nach Anspruch 1, wobei die dynamische Anzeige eines umfasst aus:
eine Radio Resource Control, RRC, Nachricht; und
eine Nicht-Stratum-, NAS-, Nachricht.

6. Verfahren nach Anspruch 1, ferner umfassend: Bestimmen, durch das mobile Gerät (116, 122, 250, 302, 600, 700, 900), ob die Anwendung einer aktuellen Netzentlastungsrichtlinie an dem mobilen Gerät (116, 122, 250, 302, 600, 700, 900) ausgesetzt werden soll.

7. Verfahren nach Anspruch 1, ferner umfassend:
erneutes Implementieren der vorherigen Auslagerungsrichtlinie in Erwiderung auf eines aus:
Übergang des mobilen Geräts (116, 122, 250, 302, 600, 700, 900) in einen Leerlaufzustand in Bezug auf den WWAN-Zugangspunkt (110, 201, 601, 701, 901)
Ablauf einer Zeitschaltuhr, die durch den Empfang der dynamischen Anzeige ausgelöst wurde;
Empfangen einer neuen dynamischen Anzeige von dem WWAN-Zugangspunkt (110, 201, 601, 701, 901); und
Verlassen eines Versorgungsbereichs des WWAN-Zugangspunkts (110, 201, 601, 701, 901) durch das mobile Gerät (116, 122, 250, 302, 600, 700, 900).

8. Vorrichtung, die für drahtlose Kommunikation konfiguriert ist, umfassend:
Mittel zum Empfangen, an einem mobilen Gerät (116, 122, 250, 302, 600, 700, 900), einer Standard-Auslagerungsrichtlinie über eine Zugangsnetz-Erkennungs- und Auswahlfunktion, ANDSF, von einem Kernnetz (904), um eine Priorität für das Auslagern von Daten zu einem drahtlosen lokalen Netzwerk, WLAN (903), anzuzeigen, das dem mobilen Gerät (116, 122, 250, 301, 600, 700, 900) zugeordnet ist, wobei die Vorrichtung **dadurch gekennzeichnet ist, dass** sie umfasst;
Mittel zum Empfangen einer dynamischen Anzeige von einem Zugangspunkt (110, 210, 601, 701, 901) eines drahtlosen Weitverkehrsnetzes, WWAN, an dem mobilen Gerät (116, 122, 250, 302, 600, 700, 900), die die von dem Kernnetz (904) empfangene Standard-Entlastungsrichtlinie ändert;
Mittel zum Aussetzen der Anwendung der Standardnetzwerk-Entlastungsrichtlinie an dem mobilen Gerät (116, 122, 250, 302, 600, 700, 900) auf der Grundlage der von dem WWAN-Zugangspunkt (110, 210, 601, 701, 901) empfangenen dynamischen Anzeige; und
Mittel zum Übertragen von Daten an ein zweites WLAN (902) als Reaktion auf die dynamische Anzeige von dem WWAN-Zugangspunkt (110, 210, 601, 701, 901).

9. Vorrichtung nach Anspruch 8, ferner umfassend eines aus:
Mittel zum Wiedereinsetzen der Anwendung der Standardnetzwerk-Entlastungsrichtlinie in Erwiderung auf eines aus:
Übergang des mobilen Geräts (116, 122, 250, 302, 600, 700, 900) in einen Leerlaufzustand in Bezug auf den WWAN-Zugangspunkt (110, 210, 601, 701, 901)
Ablauf einer Zeitschaltuhr, die durch den Empfang der dynamischen Anzeige ausgelöst wurde;
Empfangen einer neuen dynamischen Anzeige von dem WWAN (110, 210, 601, 701, 901);
Verlassen eines Versorgungsbereichs des WWAN-Zugangspunkts (110, 210, 601, 701, 901) durch das mobile Gerät (116, 122, 250, 302, 600, 700, 900); und
Mittel zum Berichten von Messungen, die von dem mobilen Gerät (116, 122, 250, 302, 600, 700, 900) des zweiten WLANs vorgenommen wurden, an den WWAN-Zugangspunkt (110, 210, 601, 701, 901), wobei die dynamische Anzeige von dem WWAN-Zugangspunkt (110, 210, 601, 701, 901) in Reaktion auf die gemeldeten Messungen empfangen wird.

10. Vorrichtung nach Anspruch 8, wobei die dynamische Anzeige eine Kennung für den zum zweiten WLAN auszulagerndem Verkehr enthält.

11. Vorrichtung nach Anspruch 8, ferner umfassend:
Mittel zum Bestimmen, ob die Anwendung der Standard-Netzwerkrichtlinie ausgesetzt werden soll, wobei das Bestimmen, ob die Anwendung ausgesetzt werden soll, das Bestimmen einschließt, ob die Standard-Auslagerungsrichtlinie eine Angabe darüber enthält, ob sie die dynamische Anzeige von dem WWAN-Zugangspunkt (110, 210, 601, 701, 901) empfangen soll, wenn diese verfügbar ist.

12. Vorrichtung nach Anspruch 8, ferner umfassend: Mittel zum Bestimmen durch das mobile Gerät (116, 122, 250, 302, 600, 700, 900), ob die Anwendung einer aktuellen Netzwerk-Auslagerungsrichtlinie an dem mobilen Gerät (116, 122, 250, 302, 600, 700, 900) ausgesetzt werden soll.

13. Vorrichtung nach Anspruch 8, ferner umfassend: Mittel zum Berichten von Messungen, die von dem mobilen Gerät (116, 122, 250, 302, 600, 700, 900) des zweiten WLANs vorgenommen wurden, an den WWAN-Zugangspunkt (110, 210, 601, 701, 901), wobei die dynamische Anzeige von dem WWAN-Zugangspunkt (110, 210, 601, 701, 901) in Erwiderung auf die berichteten Messungen empfangen wird.

14. Computerprogramm für drahtlose Kommunikation in einem drahtlosen Netzwerk, umfassend:
ein nichtflüchtiges computerlesbares Medium mit darauf aufgezeichnetem Programmcode, wobei der Programmcode eine Vorrichtung eines mobilen Geräts veranlasst, den Verfahrensschritt der Ansprüche 1 bis 7 auszuführen.

## Revendications

1. Un procédé de communication sans fil, comprenant :
la réception, au niveau d'un dispositif mobile (116, 122, 250, 302, 600, 700, 900), d'une politique de délestage standard via une fonction de découverte et de sélection de réseau d'accès, ANDSF, à partir d'un réseau central (904) pour indiquer une priorité pour le délestage de données vers un réseau local sans fil, WLAN (903), associé au dispositif mobile (116, 122, 250, 301, 600, 700, 900) ;
le procédé étant **caractérisé par**
la réception, au niveau du dispositif mobile (116, 122, 250, 302, 600, 700, 900), d'une indication dynamique à partir d'un point d'accès de réseau étendu sans fil, WWAN, (110, 210, 601, 701, 901) qui modifie la politique de délestage standard reçue à partir du réseau central (904) ;
la suspension de l'application de la politique de délestage de réseau standard au niveau du dispositif mobile (116, 122, 250, 302, 600, 700, 900) sur la base de l'indication dynamique reçue à partir du point d'accès WWAN (110, 210, 601, 701, 901) ; et
l'émission de données vers un second WLAN (902) en réponse à l'indication dynamique provenant du point d'accès WWAN (110, 210, 601, 701, 901).

2. Le procédé selon la revendication 1, comprenant en outre l'un parmi :
le rétablissement de l'application de la politique de délestage de réseau standard en réponse à l'un parmi :
le dispositif mobile (116, 122, 250, 302, 600, 700, 900) qui passe à un état inactif par rapport au point d'accès WWAN (110, 210, 601, 701, 901) ;
l'expiration d'une minuterie déclenchée lors de la réception de l'indication dynamique ;
la réception d'une nouvelle indication dynamique en provenance du point d'accès WWAN (110, 210, 601, 701, 901) ; et
le dispositif mobile (116, 122, 250, 302, 600, 700, 900) qui sort d'une zone de couverture du point d'accès WWAN (110, 210, 601, 701, 901) ; et
la notification au WWAN (110, 210, 601, 701, 901) de mesures prises par le dispositif mobile (116, 122, 250, 302, 600, 700, 900) du second WLAN, dans lequel l'indication dynamique est reçue à partir du point d'accès WWAN (110, 210, 601, 701, 901) en réponse aux mesures notifiées.

3. Le procédé selon la revendication 1, dans lequel l'indication dynamique comporte un identifiant pour du trafic à délester vers le second WLAN.

4. Le procédé selon la revendication 1, comprenant en outre : la détermination s'il faut suspendre ou non l'application de la politique de délestage de réseau standard, dans lequel la détermination s'il faut ou non suspendre comporte la détermination si la politique de délestage de réseau standard comprend ou non une indication s'il convient ou non de recevoir l'indication dynamique à partir du point d'accès WWAN (110, 210, 601, 701, 901) lorsqu'elle est disponible.

5. Le procédé selon la revendication 1, dans lequel l'indication dynamique comprend l'un parmi :
un message de contrôle de ressource radio, RRC ; et
un message non de strate, NAS.

6. Le procédé selon la revendication 1, comprenant en outre la détermination, par le dispositif mobile (116, 122, 250, 302, 600, 700, 900), s'il faut ou non suspendre l'application d'une politique de délestage de réseau courante au niveau du dispositif mobile (116, 122, 250, 302, 600, 700, 900).

7. Le procédé selon la revendication 1, comprenant en outre :
la remise en œuvre de la précédente politique de délestage en réponse à l'un parmi :
le dispositif mobile (116, 122, 250, 302, 600, 700, 900) qui passe à un état inactif par rapport au point d'accès WWAN (110, 201, 601, 701, 901) ;
l'expiration d'une minuterie déclenchée lors de la réception de l'indication dynamique ;
la réception d'une nouvelle indication dynamique en provenance du point d'accès WWAN (110, 201, 601, 701, 901) ; et
la sortie d'une zone de couverture du point d'accès WWAN (110, 201, 601, 701, 901) par le dispositif mobile (116, 122, 250, 302, 600, 700, 900).

8. Un appareil configuré pour une communication sans fil, comprenant :
un moyen pour recevoir, au niveau d'un dispositif mobile (116, 122, 250, 302, 600, 700, 900), une politique de délestage standard via une fonction de découverte et de sélection de réseau d'accès, ANDSF, à partir d'un réseau central (904) pour indiquer une priorité pour le délestage de données vers un réseau local sans fil, WLAN (903), associé au dispositif mobile (116, 122, 250, 301, 600, 700, 900) ;
l'appareil étant **caractérisé en ce qu'**il comprend :
un moyen pour recevoir, au niveau du dispositif mobile (116, 122, 250, 302, 600, 700, 900), une indication dynamique à partir d'un point d'accès de réseau étendu sans fil, WWAN, (110, 210, 601, 701, 901) qui modifie la politique de délestage standard reçue à partir du réseau central (904) ;
un moyen pour suspendre l'application de la politique de délestage de réseau standard au niveau du dispositif mobile (116, 122, 250, 302, 600, 700, 900) sur la base de l'indication dynamique reçue à partir du point d'accès WWAN (110, 210, 601, 701, 901) ; et
un moyen pour émettre des données vers un second WLAN (902) en réponse à l'indication dynamique provenant du point d'accès WWAN (110, 210, 601, 701, 901).

9. L'appareil selon la revendication 8, comprenant en outre l'un parmi :
un moyen pour rétablir l'application de la politique de délestage de réseau standard en réponse à l'un parmi :
le dispositif mobile (116, 122, 250, 302, 600, 700, 900) qui passe à un état inactif par rapport au point d'accès WWAN (110, 210, 601, 701, 901) ;
l'expiration d'une minuterie déclenchée lors de la réception de l'indication dynamique ;
la réception d'une nouvelle indication dynamique à partir du WWAN (110, 210, 601, 701, 901) ;
le dispositif mobile (116, 122, 250, 302, 600, 700, 900) qui sort d'une zone de couverture du point d'accès WWAN (110, 210, 601, 701, 901) ; et
un moyen pour notifier au point d'accès WWAN (110, 210, 601, 701, 901) des mesures prises par le dispositif mobile (116, 122, 250, 302, 600, 700, 900) du second WLAN, dans lequel l'indication dynamique est reçue à partir du point WWAN (110, 210, 601, 701, 901) en réponse aux mesures notifiées.

10. L'appareil selon la revendication 8, dans lequel l'indication dynamique comporte un identifiant pour du trafic devant être délesté vers le second WLAN.

11. L'appareil selon la revendication 8, comprenant en outre :
un moyen pour déterminer s'il faut suspendre l'application de la politique réseau standard, dans lequel la détermination de s'il faut suspendre comporte la détermination de si la politique de délestage standard comprend une indication de s'il convient recevoir l'indication dynamique à partir du point d'accès WWAN (110, 210, 601, 701, 901) lorsqu'elle est disponible.

12. L'appareil selon la revendication 8, comprenant en outre un moyen pour déterminer, par le dispositif mobile (116, 122, 250, 302, 600, 700, 900), s'il faut suspendre l'application d'une politique de délestage de réseau courante au niveau du dispositif mobile (116, 122, 250, 302, 600, 700, 900).

13. L'appareil selon la revendication 8, qui comprend en outre : un moyen pour notifier des mesures prises par le dispositif mobile (116, 122, 250, 302, 600, 700, 900) du second WLAN au point d'accès WWAN (110, 210, 601, 701, 901), dans lequel l'indication dynamique est reçue à partir du point d'accès WWAN (110, 210, 601, 701, 901) en réponse aux mesures notifiées.

14. Un programme d'ordinateur pour des communications sans fil dans un réseau sans fil, comprenant :
un support non transitoire lisible par ordinateur ayant un code de programme enregistré sur celui-ci, le code de programme amenant un appareil d'un dispositif mobile à réaliser le procédé selon les revendications 1 à 7.
